Europäisches Patentamt

European Patent Office

Office européen des brevets

(11) Numéro de publication: **0 251 899 B1**

# FASCICULE DE BREVET EUROPEEN

(45) Date de publication de fascicule du brevet:
**29.01.92**

(51) Int. Cl.⁵: **C03B 33/02**

(21) Numéro de dépôt: **87401452.5**

(22) Date de dépôt: **24.06.87**

(54) **Dispositif pour exercer des forces de pression sur un vitrage dans une chaîne de fabrication de vitrages d'automobiles et en particulier dans un poste de découpe.**

(30) Priorité: **27.06.86 DE 3621640**

(43) Date de publication de la demande:
**07.01.88 Bulletin 88/01**

(45) Mention de la délivrance du brevet:
**29.01.92 Bulletin 92/05**

(84) Etats contractants désignés:
**BE CH DE ES FR GB IT LI LU NL SE**

(56) Documents cités:
**EP-A- 0 028 988**

(73) Titulaire: **SAINT-GOBAIN VITRAGE INTERNA-TIONAL
18, avenue d'Alsace
F-92400 Courbevoie(FR)**

(84) Etats contractants désignés:
**BE CH ES FR GB IT LI LU NL SE**

Titulaire: **VEGLA Vereinigte Glaswerke GmbH
Viktoriaallee 3-5
W-5100 Aachen(DE)**

(84) Etats contractants désignés:
**DE**

(72) Inventeur: **Kittel, Florenz
Am Langenberg 22
W-5120 Herzogenrath(DE)**

(74) Mandataire: **Leconte, Jean-Gérard et al
SAINT-GOBAIN VITRAGE 39, Ouai Lucien Le-franc
F-93300 AUBERVILLIERS(FR)**

## Description

La présente invention concerne un dispositif pour exercer une pression mécanique localement sur un vitrage, à l'aide de poussoirs qui sont disposés perpendiculairement au plan du vitrage, portés par un plateau parallèle à ce vitrage et déplaçables entre une position de repos ou rétractée et une position de travail ou étendue.

Un dispositif de ce type décrit dans le document de brevet européen 28988 est utilisé pour rompre des bandes de verre à l'extérieur d'une ligne de découpe tracée sur une plaque de verre et délimitant un vitrage. Dans ce cas, les poussoirs qui sont disposés à courte distance les uns des autres, sont abaissés sur la plaque de verre posée sur un support plan et élastique, d'une manière telle que sur les bandes situées en dehors de la ligne de découpe soit exercée une pression plus élevée que sur la partie vitrage située à l'intérieur de la ligne de découpe.

Selon la forme et la grandeur des vitrages à obtenir, il faut que les forces de pression exercées par les poussoirs agissent en des endroits différents. Dans le système connu, pour pouvoir modifier les endroits d'application de ces forces, les poussoirs sont montés par groupes dans des boitiers et ces boitiers actionnés ensemble, sont montés déplaçables sur un plateau support commun. Afin de régler les poussoirs pour un autre format de vitrage, il faut détacher du plateau support les boîtiers portant les groupes de poussoirs et les refixer en d'autres endroits sur ce plateau. L'adaptation du dispositif à une autre forme de vitrage ou à une autre grandeur de vitage entraîne donc en général une interruption de la production, car elle s'effectue à la main et prend un certain temps.

L'invention a pour but de perfectionner les dispositifs du type précité d'une manière telle que l'adaptation à une autre grandeur et/ou à une autre forme de vitrage s'effectue sans perte de temps et sans intervention manuelle sur les poussoirs. De plus, il est souhaité que ces dispositifs ainsi perfectionnés puissent se prêter à l'automatisation complète d'une chaîne de traitement du verre.

Ce but est réalisé, conformément à l'invention, par le fait qu'un grand nombre de poussoirs est prévu sur le plateau support, sur une grande étendue couvrant diverses grandeurs et formes de vitrages, et que chaque poussoir peut être commandé individuellement, indépendamment des poussoirs voisins, en fonction de la forme et de la grandeur de la plaque de verre de départ et du vitrage a en extraire de façon à passer de sa position de repos rétractée à sa position de travail.

Les poussoirs sont répartis sur la totalité du plateau support, de préférence sous la forme d'un damier régulier.

Dans un développement avantageux de l'invention, les poussoirs sont actionnés isolément ou par groupe grâce à un programme propre à chaque plaque de verre et vitrage. Le programme peut être stocké sur un support de données adéquat. De cette façon, le fonctionnement entièrement automatique d'un tel dispositif est possible car, en cas de changement de la forme ou de la grandeur du vitrage, la position des poussoirs à activer, adaptée à la forme et à la grandeur du vitrage en question, est déterminée d'avance et est stockée dans un programme ; avant ou après l'entrée du vitrage dans le poste de traitement, les poussoirs correspondant au nouveau programme sont activés.

Selon une première forme d'exécution, lorsqu'un dispositif conforme à l'invention est utilisé dans un poste de rompage, le plateau support est monté fixe parallèlement au vitrage et les forces de pression sont exercées par le déplacement des poussoirs de leur position de repos rétractée vers leur position de travail étendue.

Selon une autre forme d'exécution d'un dispositif conforme à l'invention, le plateau support est monté déplaçable en compagnie des poussoirs dans une direction perpendiculaire au plan du vitrage et les forces de pression sont exercées par le déplacement du plateau support en direction du vitrage étant entendu qu'avant ce déplacement du plateau support, certains poussoirs ont été amenés dans leur position de travail conformément à une répartition prédéfinie ou grâce au programme prédéfini.

En plus de son utilisation comme appareil de rompage pour des vitrages, un dispositif conforme à l'invention peut aussi être utilisé à d'autres fins, par exemple pour orienter des vitrages dans un poste de traitement.

Dans ce cas au moins un plateau support équipé de poussoirs disposés en damier et activables séparément, est monté déplaçable parallèlement aux vitrages à orienter, certains des poussoirs étant alors activés de façon à servir de butées contre lesquelles les vitrages viennent s'appuyer pour s'orienter.

D'autres développements et avantages de l'invention ressortiront de la description de plusieurs exemples de réalisation, donnée ci-après avec référence aux dessins annexés, dans lesquels :

la figure 1 est une vue d'ensemble, en perspective, d'une chaîne de fabrication assurant le traçage d'une ligne de découpe puis le rompage d'un vitrage d'automobile ;

la figure 2 est une vue de dessous du plateau support pourvu d'un damier de poussoirs dans un poste de rompage de l'installation illustrée sur la figure 1 ;

la figure 3 est une vue de côté d'une première forme d'exécution d'un poste de rompage conforme à l'invention ;

la figure 4 est une vue de côté d'une deuxième forme d'exécution d'un poste de rompage conforme à l'invention, et

la figure 5 est une vue en plan d'un poste d'orientation à l'intérieur d'une chaîne de traitement pour vitrages, équipé d'un dispositif de positionnement conforme à l'invention.

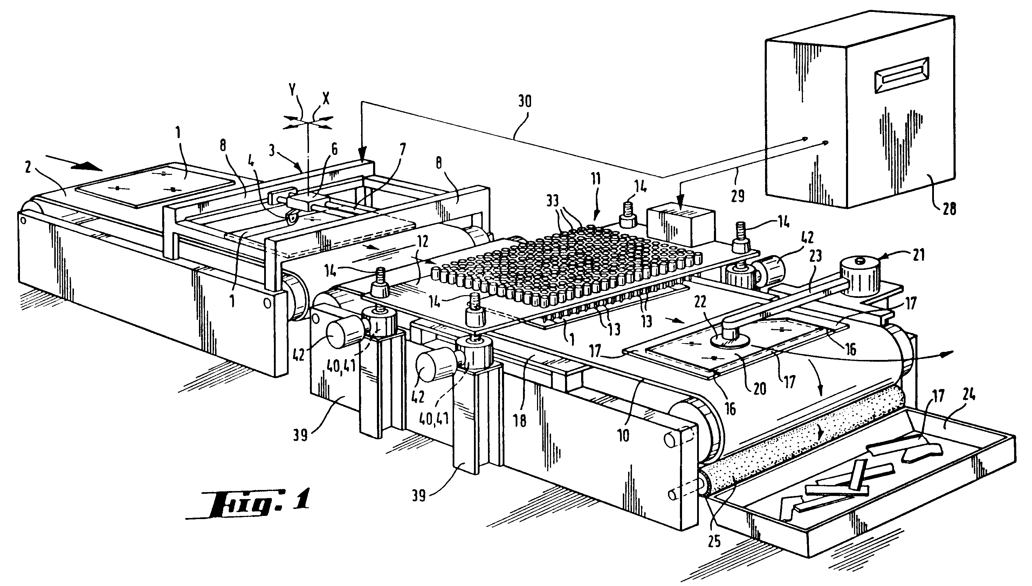

La figure 1 est une vue d'ensemble d'une chaîne de fabrication assurant la le traçage d'une ligne de découpe, puis le rompage de plaques de verre à l'aide d'un poste de rompage conforme à l'invention. Des plaques de verre rectangulaires 1 sont amenées sur un convoyeur 2 à un automate de découpe 3. A l'aide de l'automate de découpe 3, une ligne de découpe correspondant à la forme souhaitée d'un vitrage est reportée sur la plaque de verre 1. L'outil de coupe 4 est à cet effet monté sur un coulisseau 6 piloté par programme, qui est mobile le long d'un élément de pontage 7, cet élément de pontage 7 étant quant à lui mobile le long de glissières perpendiculaires 8. Un tel automate de découpe à coulisseau et à mouvement suivant deux directions peut être pourvu de dispositifs d'entraînement à moteurs linéaires pour chacune des deux directions comme décrit, par exemple, dans le document de brevet DE-PS-34 09 300 (ou EP 155218).

Lorsque la ligne de découpe a été tracée sur une plaque de verre, cette plaque de verre est transférée sur une bande transporteuse 10 à la suite du convoyeur 2 pour être amenée ainsi au dispositif de rompage automatique 11. Dans ce dispositif de rompage 11 disposé au-dessus de la bande transporteuse 10 et parallèlement à celle-ci, est installé un plateau support 12 qui porte, sur sa face inférieure, un grand nombre de poussoirs 13 disposés en damier. Le plateau support 12 est monté sur quatre vérins à vis 14 qui permettent de le soulever ou de l'abaisser. Parmi les poussoirs 13 disposés en damier, seuls quelques poussoirs sélectionnés sont activés, c'est à dire qu'ils sont amenés d'une position de repos rétractée dans une position de travail abaissée ou étendue, tandis que tous les autres poussoirs en position de repos n'entrent pas en contact avec la plaque de verre.

Le cas échéant, dans l'automate de découpe 3 ou l'appareil de rompage 11, sont disposés des appareils de découpe auxiliaires, non représentés, au moyen desquels des lignes de découpe auxiliaires 16 sont formées dans la partie marginale 17 de verre à détacher pour obtenir un vitrage afin le cas échéant, de faciliter le rompage de ces parties marginales 17.

Pendant l'exécution de l'opération de rompage, le vitrage est posé sur la bande transporteuse 10, qui est faite d'une manière élastique et qui glisse sur une table 18 à surface plane et lisse. La table 18 est, de préférence, un plateau métallique plan.

Au terme de l'opération de rompage, le vitrage 20, y compris les parties marginales 17 rompues, est transféré à l'aide de la bande transporteuse 10 vers un poste de déchargement 21. A cet endroit, le vitrage 20 est saisi par un plateau à ventouse 22 monté sur un bras pivotant 23, soulevé de la bande transposteuse 10 et transféré à l'aide du bras pivotant 23 sur une autre chaîne de fabrication ou sur un châssis de transport. Les fragments des parties marginales 17 détachées par rompage, qui tombent de la bande transporteuse 10, sont recueillies dans un bac collecteur 24. La bande transporteuse 10 est débarrassée d'éventuels éclats de verre qui y adhèrent par un rouleau nettoyeur 25.

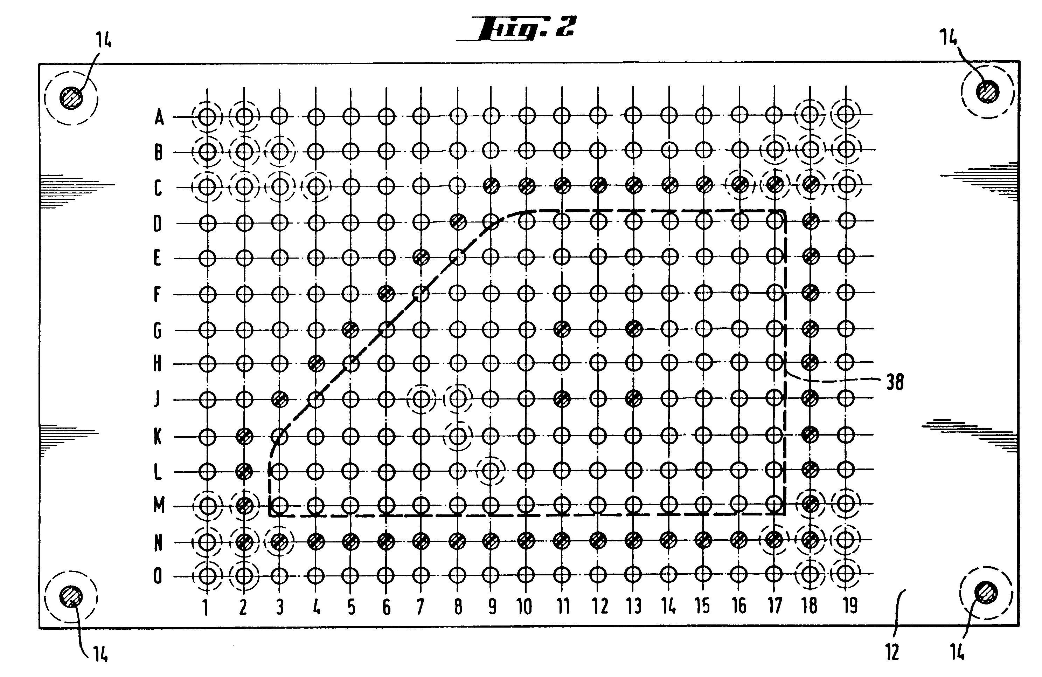

Le plateau support 12 est pourvu d'un damier régulier de poussoirs activables 13, décrit plus en détail en relation avec les Fig. 2 à 4. Les poussoirs 13 peuvent être actionnés individuellement dans n'importe quel ordre, l'actionnement de ces poussoirs 13 s'effectuant à partir d'une armoire de commande 28 par l'intermédiaire d'une conduite de commande 30. Les programmes de commande pour les automates de découpe 3 et pour les automates de rompage 11 se correspondent, c'est à dire que pour chaque programme de découpe, un programme propre adapté au programme de découpe est nécessaire pour les automates de rompage. Les deux programmes peuvent cependant être stockés sur un support de données commun, de sorte que l'ensemble de la chaîne de découpe et de rompage est commandé à l'aide d'un seul support de données.

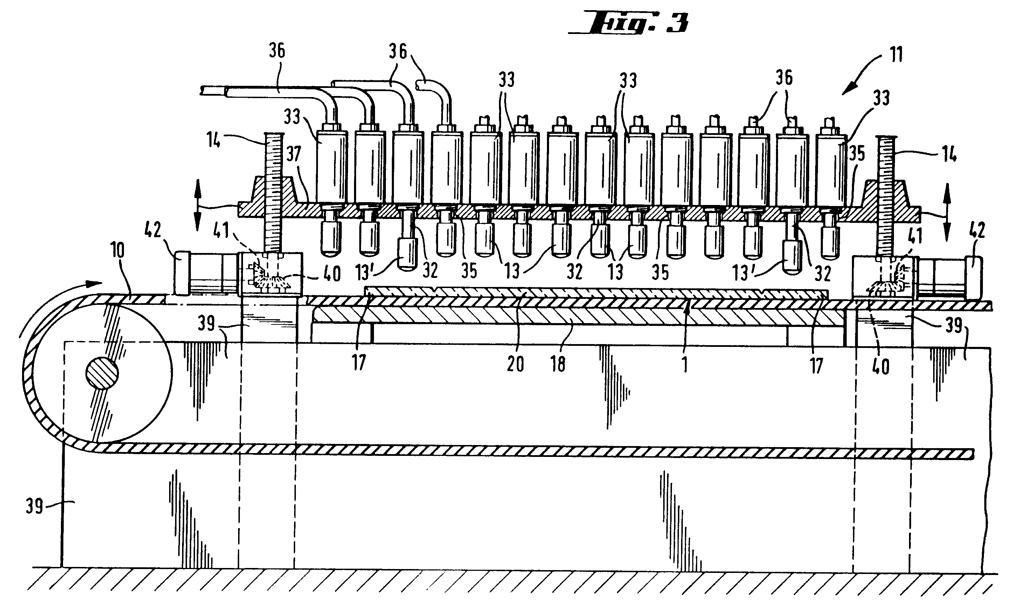

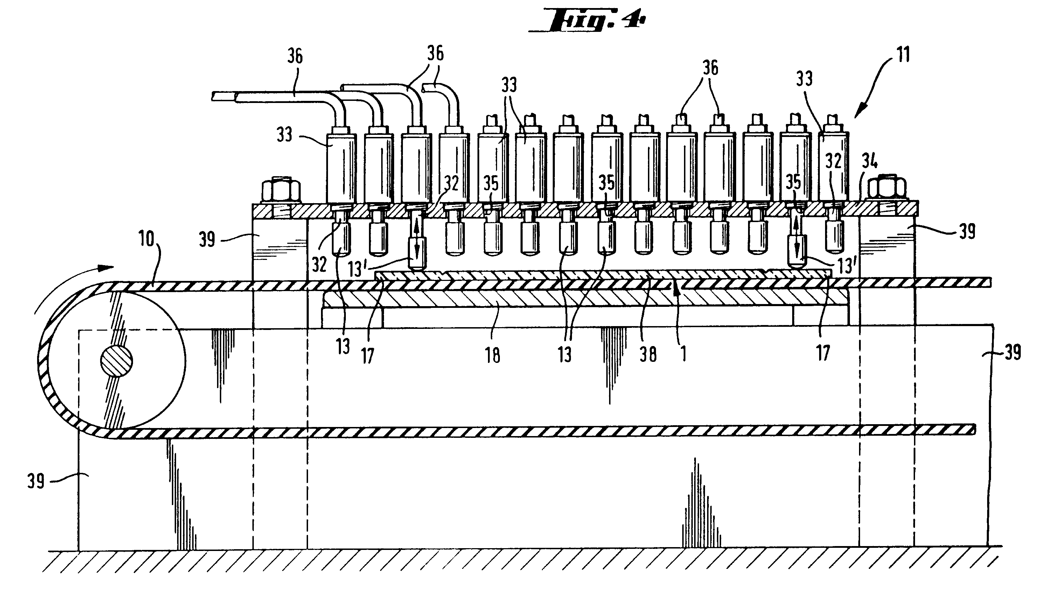

Les poussoirs 13 peuvent être activées pneumatiquement, hydrauliquement ou électriquement. Sur les figures 3 et 4, ils sont représentés comme étant activés pneumatiquement. Il s'agit de poussoirs en matière plastique qui sont montés sur des tiges de piston 32 de vérins pneumatiques 33. Les vérins pneumatiques 33 sont fixés verticalement sur un plateau support 34, tandis que les tiges de piston 32 traversent des perforations 35 disposées en damier dans le plateau support 34. Chaque vérin pneumatique 33 est pourvu d'une conduite de pression 36 qui aboutit à une électrovanne non représentée, actionnée au moyen de la commande par programme.

Pour détacher d'une plaque de verre un vitrage 38, tel que représenté en traits interrompus sur la figure 2, les poussoirs C9 à C18, 18D à 18M, N18 à N2, 2M à 2K, J3, H4, G5, F6, E7 et D8 doivent être activés pour rompre les parties marginales de la plaque de verre. De plus, les poussoirs G11, G13, J11 et J13 sont aussi activés et servent à immobiliser le vitrage 38 à peu près en son centre.

Eventuellement, sans que cela soit obligatoire, des poussoirs extérieurs au périmètre défini par les poussoirs C9 à C18, 18D à 18M, N18 à N2, 2M à 2K, J3, H4, G5, F6, E7 et D8 peuvent être également activés pour renforcer la pression sur les parties marginales 17 à détacher.

De la même façon des poussoirs de maintien du vitrage supplémentaires peuvent aussi éventuellement être excités.

La structure du damier de poussoirs et l'actionnement de ces poussoirs sont similaires dans les deux formes d'exécution représentées sur les figure 3 et 4. Dans la forme d'exécution représentée sur la figure 4, le plateau support 34 est cependant fixé rigidement au bâti 39 de la machine et le rompage des parties marginales 17 de la plaque de verre conduisant au vitrage 38 s'effectue de telle façon qu'après le positionnement de la plaque de verre, des poussoirs 13' sélectionnés soient abaissés par alimentation en air comprimé des vérins associés.

Par contre, dans la forme d'exécution illustrée sur la figure 3, qui correspond à celle représentée sur la figure 1, le plateau support 34 est soulevé ou abaissé grâce au fait qu'il est monté sur des vérins à vis 14 tourillonnant dans le bâti 39 de la machine et mus en rotation par l'intermédiaire de pignons coniques 40, 41 et de moteurs électriques 42. Dans ce cas, les poussoirs 13' sélectionnées pour le rompage des parties marginales 17 sont déjà amenés dans leur position de travail étendue avant le rompage proprement dit. Pour amorcer 1e rompage, après le positionnement de la plaque de verre, les moteurs 42 sont actionnés pour abaisser le plateau support 34 et les poussoirs 13' se trouvant dans la position de travail sont de cette façon amenés à agir sur les parties marginales 17.

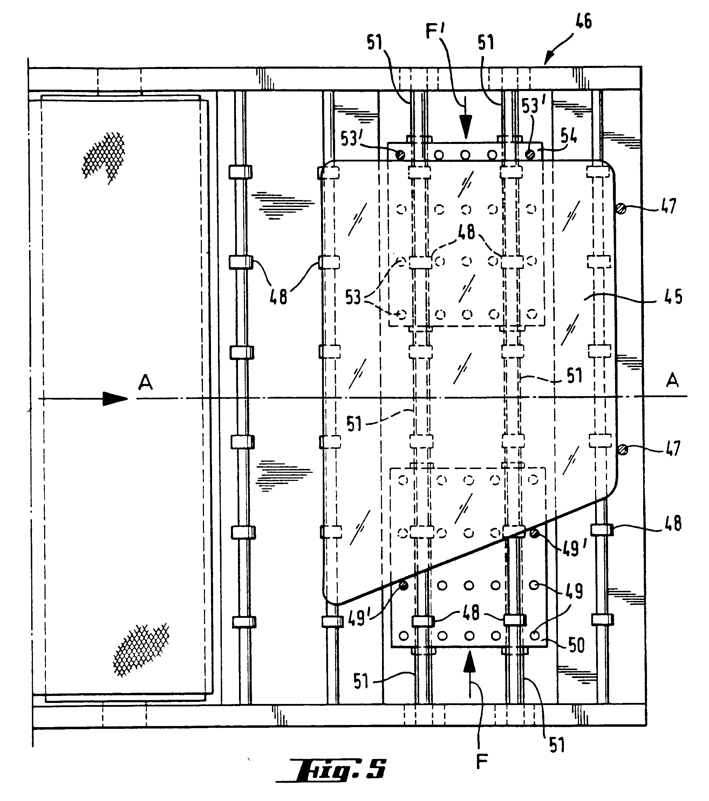

La figure 5 illustre une manière d'utiliser l'appareil conforme à l'invention, pour positionner un vitrage dans un poste de travail ou sur une bande transporteuse. Dans le cas représenté, il s'agit de vitrages trapézoïdaux 45, qui doivent être positionnés à l'intérieur d'un poste d'orientation 46. La réalisation du poste d'orientation conformément à l'invention permet de programmer la chaîne de fabrication d'une manière telle que des vitrages de formes et de dimensions différentes puissent être amenés dans une position souhaitée dans le poste d'orientation sans qu'une intervention manuelle soit nécessaire.

Le positionnement du vitrage 45 s'effectue d'une manière connue à l'aide de butée agissant sur les bords latéraux du vitrage, butées montées déplaçables à l'intérieur du poste d'orientation 46 dans le sens des flèches F, F', et au moyen desquelles le vitrage est amené dans la position souhaitée, tandis que la position de son bord antérieur est déterminée par d'autres butées 47 que le vitrage vient heurter lors de son mouvement d'avancée sur un transporteur 48 par exemple à rouleaux.

Comme butées agissant sur les bords latéraux du vitrage on utilise des poussoirs du dispositif selon l'invention mis en position activée. D'un côté du poste d'orientation, sont prévus des poussoirs 49 disposés en damier régulier sur un plateau support 50, qui est monté mobile dans le sens de la flèche F sur des glissières 51 grâce à un coulisseau. Le déplacement s'effectue à l'aide d'un vérin, non représenté, qui est commandé par une unité de commande centrale. Symétriquement par rapport à l'axe central A-A du poste d'orientation, de l'autre côté, sont disposés d'autres poussoirs 53 appartenant à un autre plateau support 54 ; ce plateau support 54 est monté déplaçable par l'intermédiaire de coulisseaux sur les glissières 51. Ce mouvement est également effectué par un vérin à commande centrale non représenté. Les plateaux supports mobiles 50 et 54 sont disposés en dessous du plan de transport des vitrages, de telles sorte que les poussoirs se trouvant dans leur position de repos n'entrent pas en contact avec le vitrage et que seuls les poussoirs 49' et 53' appartenant au groupe de poussoirs 49 et 33 soient amenés dans leur position de travail pour agir sur les bords du vitrage.

Dans le cas représenté, du premier côté, les deux poussoirs 49' et de l'autre côté les deux poussoirs 53', correspondant à la forme et à la grandeur du vitrage 45, sont sélectionnés d'une manière telle que lorsque les plateaux support 52, 54 sont approchés du vitrage, la position souhaitée soit atteinte.

Les poussoirs 49, 53 peuvent être activés d'une manière quelconque, étant entendu qu'ils peuvent être actionnés, en particulier, par un vérin pneumatique ou hydraulique ou par un électroaimant. L'activation des poussoirs s'effectue de préférence automatiquement, en fonction de la forme et de la grandeur du vitrage qu'il faut positionner, l'activation d'après un programme de commande donné étant en particulier possible et allant de pair aussi avec une commande centrale d'autres fonctions à l'intérieur de la chaîne de traitement.

**Revendications**

1. Dispositif pour exercer des forces de pression localement sur une plaque de verre dans une chaîne de fabrication de vitrages d'automobiles, à l'aide de poussoirs (13, 49, 53) qui sont disposés perpendiculairement au plan du vitrage sur un plateau support (12, 34, 50, 54) parallèle à ce vitrage et qui peuvent être déplacés entre une position de repos rétractée et une position de travail étendue, caractérisé en ce qu'un grand nombre de poussoirs (13, 49, 53) est prévu sur le plateau support (12, 34, 50, 54) sur une grande étendue couvrant diverses grandeurs et formes de vitrages et en ce que chaque poussoir (13, 49, 53) peut être déplacé indépendamment des poussoirs voisins, de sa position de repos à une position de travail, en fonction de la forme et de la grandeur du vitrage en question.

2. Dispositif suivant la revendication 1, caractérisé en ce que les poussoirs (13, 49, 53) sont disposés sur le plateau support (12, 34, 50, 54) suivant une répartition en damier régulier.

3. Dispositif suivant la revendication 1 ou 2, caractérisé en ce que les poussoirs (13, 49, 53) peuvent être déplacés de leur position de repos à leur position active ou vice-versa par des vérins pneumatiques ou hydrauliques (33).

4. Dispositif suivant la revendication 1 ou 2, caractérisé en ce qu les poussoirs (13, 49, 53) peuvent être déplacés de leur position active à leur position de repos ou vice-versa au moyen d'électroaimants.

5. Dispositif suivant l'une quelconque des revendications 1 à 4, caractérisé en ce que les vérins (33) ou les électroaimants actionnant les poussoirs (13, 49, 53) peuvent être activés selon un programme propre à chaque vitrage.

6. Application d'un dispositif suivant l'une quelconque des revendication 1 à 5 à un appareil destiné à rompre les parties marginales d'une plaque de verre pourvue d'une ligne de découpe délimitant un vitrage caractérisée en ce que le plateau support (34) pourvu des poussoirs (13) est monté fixe et que les forces de pression sont exercées sur la plaque de verre à des endroits prédéterminés, par des poussoirs (13') pendant leur déplacement de leur position de repos vers leur position de travail.

7. Application d'un dispositif suivant l'une quelconque des revendications 1 à 5 à un appareil destiné à rompre les parties marginales d'une plaque de verre pourvue d'une ligne de découpe délimitant un vitrage caractérisée en ce que le plateau support (37) pourvu des poussoirs (13) est monté mobile dans une direction perpendiculaire à la plaque de verre et en ce que des poussoirs prédéterminés (13') sont déplacés vers leur position de travail avant le rompage proprement dit, les forces de pression étant exercées sur la plaque de verre par le déplacement du plateau support (37) pourvu de poussoirs (13') sortis dans leur position de travail.

8. Application d'un dispositif suivant l'une quelconque des revendications 1 à 5 à un appareil servant à positionner un vitrage déposé sur une voie de transport horizontale, caractérisée en ce qu'au moins un plateau support (50, 54) comportant des poussoirs (49, 53) répartis en un damier régulier, est disposé parallèlement au plan de transport des vitrages (45) et est monté déplaçable le long de glissières (51) perpendiculaires à l'axe central (A-A) du poste d'orientation, certains des poussoirs étant sortis en position active pour servir de butées aux bords du vitrage.

9. Application d'un dispositif suivant l'une quelconque des revendications 1 à 5 à une chaîne de fabrication de vitrages d'automobiles, caractérisée en ce que l'activation des poussoirs (13) s'effectue en fonction de la forme et de la grandeur des vitrages et en ce que la commande d'autres opérations de traitement à l'intérieur de la chaîne de fabrication, comme la découpe et/ou le façonnage des bords des vitrages est assurée par une unité de commande centrale commune (28).

10. Application d'un dispositif suivant la revendication 9, caractérisée en ce que les signaux de commande pour l'activation des poussoirs et pour les autres opérations de traitement sont stockés sur un seul et même support de données.

## Claims

1. Apparatus for locally exerting pressure forces on a glass plate in a car glazing production line, with the aid of push rods (13, 49, 53) arranged perpendicular to the plane of the glazing on a support panel (12, 34, 50, 54) parallel to the said glazing and which can be moved between a retracted inoperative position and an extended operating position, characterized in that a large number of push rods (13, 49, 53) is provided on the support panel (12, 34, 50, 54) over a large area covering various glazing shapes and sizes and in that each push rod (13, 49, 53) can be displaced independently of the adjacent push rods from its inoperative position to an operative position, as a function of the shape and size of the glazing in question.

2. Apparatus according to clam 1, characterized in that the push rods (13, 49, 53) are placed on the support panel (12, 34, 50, 54) in accordance with a regular draughtboard distribution.

3. Apparatus according to claims 1 or 2, characterized in that the push rods (13, 49, 53) can be moved from their inoperative position to their active position or vice versa pneumatic or hydraulic jacks (33).

4. Apparatus according to claims 1 or 2, characterized in that the push rods (13, 49, 53) can be moved from their active position to their inoperative position or vice versa by means of electromagnets.

5. Apparatus according to any one of the claims 1 to 4, characterized in that the jacks (33) or electromagnets actuating the push rods (13, 49, 53) can be activated according to a program for each specific glazing.

6. Application of apparatus according to any one of the claims 1 to 5 to a device for breaking the marginal parts of a glass plate provied with a cutting line defining a glazing, characterized in that the support panel (34) having push rods (13) is fixed and the pressure forces are exerted on the glass plate at predetermined locations by push rods (13') during their movement from their inoperative position to their operative position.

7. Application of an apparatus according to any one of the claims 1 to 5 to a device for breaking the marginal parts of a glass plate having a cutting line defining a glazing, characterized in that the support panel (37) having push rods (13) is fitted so as to be able to move in a direction parallel to the glass plate and in that predetermined push rods (13') are moved towards their operative position before breaking takes place, the pressure forces being exerted on the glass plate by the movement of the support panel (37) having push rods (13') into the operating position thereof.

8. Application of an apparatus according to any one of the clams 1 to 5 to a device for positioning a glazing deposited on a horizontal conveying means, characterized in that at least one support panel (50, 54) having push rods (49, 53) arranged in a regular draughtboard configuration is positioned parallel to the conveying plane of the glazings (45) and is fitted so as to move along slides (51) perpendicular to the central axis (A-A) of the orientation station, certain of the push rods being pushed in the active position to serve as abutments for the edges of the glazing.

9. Application of an apparatus according to any one of the claims 1 to 5 to a car glazing production line, characterized in that the activation of the push rods (13) takes place as a action of the shape and size of the glazings and in that the control of the other treatment operations within the production line, such as the cutting and/or grinding of the edges of the glazings, is ensured by a common central control unit (28).

10. Application of an apparatus according to claim 9, characterized in that the control signals for the activation of the push rods and for other treatment operations are stored on the same data support.

**Patentansprüche**

1. Vorrichtung zum Aufbringen von lokal einwirkenden Druckkräften auf eine Glasscheibe innerhalb einer Fertigungslinie für Autoglasscheiben, mit Hilfe von Druckstiften (13,49,53), die auf einer parallel zu der Glasscheibe angeordneten Trägerplatte (12,34,50,54) in zu der Glasscheibenebene senkrechter Ausrichtung angeordnet und von einer zurückgezogenen Ruhestellung in eine ausgefahrene Arbeitsstellung verschiebbar sind, **dadurch gekennzeichnet,** daß auf der Trägerplatte (12,34,50,54) eine Vielzahl von Druckstiften (13,49,53) in großflächiger, unterschiedliche Größen und Formen der Glasscheiben abdeckender Anordnung angeordnet sind, und daß jeder einzelne Druckstift (13,49,53) unabhängig von den benachbarten Druckstiften in Abhängigkeit von der Form und der Größe der jeweiligen Glasscheibe von seiner Ruhestellung in seine Arbeitsstellung bewegbar ist.

2. Vorrichtung nach Anspruch 1, dadurch gekennzeichnet, daß die Druckstifte (13,49,53) auf der Trägerplatte (12,34,50,54) in Form eines regelmäßigen Rasters angeordnet sind.

3. Einrichtung nach Anspruch 1 oder 2, dadurch gekennzeichnet, daß die Druckstifte (13,49,53) von ihrer Ruhestellung in ihre Arbeitsstellung und umgekehrt durch pneumatische oder hydraulische Druckzylinder (33) bewegbar sind.

4. Vorrichtung nach Anspruch 1 oder 2, dadurch gekennzeichnet, daß die Druckstifte (13,49 53) von ihrer Arbeitsstellung in ihre Ruhestellung und umgekehrt mit Hilfe von Elektromagneten bewegbar sind.

5. Vorrichtung nach einem der Ansprüche 1 bis 4, dadurch gekennzeichnet, daß die die Druckstifte (13,49,53) betätigenden Druckzylinder (33) oder Elektromagnete entsprechend einem jeder Glasscheibe zugeordneten Programm ansteuerbar sind.

6. Anwendung einer Vorrichtung nach einem der Ansprüche 1 bis 5 bei einer Vorrichtung zum Abbrechen der Randpartien einer mit einer eine Glasscheibe begrenzenden Schnittlinie versehenen Glasplatte, dadurch gekennzeichnet, daß die mit den Druckstiften (13) versehene Trägerplatte (34) ortsfest angeordnet ist, und daß die Druckkräfte an den vorbestimmten Stellen durch die entsprechenden Druckstifte (13') während ihrer Bewegung von der Ruhestellung in die Arbeitsstellung auf die Glasplatte ausgeübt werden.

7. Anwendung einer Vorrichtung nach einem der Ansprüche 1 bis 5 bei einer Vorrichtung zum Abbrechen der Randpartien einer mit einer eine Glasscheibe begrenzenden Schnittlinie versehenen Glasplatte, dadurch gekennzeichnet, daß die mit den Druckstiften (13) versehene Trägerplatte (37) in Richtung senkrecht zur Glasplatte beweglich gelagert ist, daß die vorbestimmten Druckstifte (13') vor dem eigentlichen Ausbrechvorgang in ihre Arbeitsstellung bewegt sind, und daß die Druckkräfte durch die Bewegung der die in ihre Arbeitsstellung ausgefahrenen Druckstifte (13') aufweisenden Trägerplatte (37) auf die Glasplatte ausgeübt werden.

8. Anwendung einer Vorrichtung nach einem der Ansprüche 1 bis 5, bei einer Vorrichtung zum Positionieren einer auf einer horizontalen Transportbahn liegenden Glasscheibe, dadurch gekennzeichnet, daß wenigstens eine Trägerplatte (50, 54) mit in regelmäßigem Raster angeordneten Druckstiften (49, 53) parallel zur Transportebene für die Glasscheiben (45) angeordnet und entlang von quer zur Mittelachse (A-A) der Ausrichtstation angeordneten Gleitschienen (51) verschiebbar angeordnet ist, wobei bestimmte Druckstifte in ihre aktive Stellung verbracht sind, um als Anschläge für die Kanten der Glasscheibe zu dienen.

9. Anwendung einer Vorrichtung nach einem der Ansprüche 1 bis 5 bei einer Fabrikationslinie für Autoglasscheiben, dadurch gekennzeichnet, daß die Aktivierung der Druckstifte (13) In Abhängigkeit von der Form und Größe der jeweiligen Glasscheiben erfolgt und daß die Steuerung anderer Bearbeitungsvorgänge innerhalb der Fabrikationslinie, wie Formschneiden und/oder Kantenschleifen der Glasscheiben, durch eine gemeinsame zentrale Steuereinheit (28) vorgenommen wird.

10. Anwendung einer Vorrichtung nach Anspruch 9, dadurch gekennzeichnet, dass die Steuersignale für die Aktivierung der Druckstifte und für die übrigen Bearbeitungsvorgänge auf ein und demselben Datenträger gespeichert sind.

Fig. 1

EP 0 251 899 B1

**Fig.2**

Fig. 3

EP 0 251 899 B1

Fig. 4

*Fig: 5*